# EUROPÄISCHE PATENTSCHRIFT

(11) **EP 2 742 176 B1**
(45) Veröffentlichungstag und Bekanntmachung des Hinweises auf die Patenterteilung: **08.02.2017**
(21) Anmeldenummer: 12748018.4
(22) Anmeldetag: 10.08.2012
(51) Int. Cl.: B29L 9/00, B29K 61/00, B29C 70/50, B29C 70/82, B29B 15/12, B29K 307/04, C04B 35/573, C04B 35/589, C04B 35/626, C04B 35/80, C04B 35/83

(54) **VERFESTIGTE FASERBÜNDEL**
CONSOLIDATED FIBRE BUNDLE
FAISCEAU DE FIBRES SOLIDIFIÉ

(30) Priorität: 12.08.2011 DE 102011080917; 19.08.2011 DE 102011081263
(43) Veröffentlichungstag der Anmeldung: 18.06.2014
(73) Patentinhaber: SGL Carbon SE, 65201 Wiesbaden (DE)
(72) Erfinder: BECK, Rudi, 86751 Mönchsdeggingen (DE); GOJNY, Florian, 65779 Kelkheim (DE); KOCHEMS, Frank, 86637 Wertingen (DE); MAIER, Konrad, 86687 Kaisheim (DE)
(86) Internationale Anmeldenummer: PCT/EP2012/065683
(87) Internationale Veröffentlichungsnummer: WO 2013/024025

(56) Entgegenhaltungen:
- EP-A1- 1 645 671
- EP-A1- 1 845 074
- US-A- 5 208 090

## Beschreibung

Die Erfindung betrifft verfestigte Faserbündel, ein Verfahren zu deren Herstellung, und deren Anwendung bei der Herstellung von Verbundwerkstoffen.

Aus der Europäischen Patentanmeldung Nr. 1 645 671 A1 sind polymergebundene Fasergelege bekannt, die durch Tränken eines Garnstrangs mittels Durchziehen dieses Garnstrangs durch ein Bad mit einer Lösung oder einer Schmelze eines Kunstharzes (eines duroplastischen oder wärmehärtbaren Polymers) oder eines Thermoplasten und nachfolgendes Pressen des getränkten Garnstrangs und Schneiden des flachgepressten Garnstrangs in Längs- und Querrichtung hergestellt werden.

Durch geeignete Schneideinrichtungen kann dabei zwar eine hohe Homogenität der durch die Schneid-Schritte entstandenen Faserbündel bezüglich deren Länge (gemessen als Mittelwert der räumlichen Erstreckung der Faserbündel parallel zum mittleren Vektor in Richtung des Längsverlaufs der Fasern in dem betreffenden Faserbündel) und Breite (gemessen als Mittelwert der jeweils größeren räumlichen Erstreckung der Faserbündel senkrecht zum mittleren Vektor in Richtung des Längsverlaufs der Fasern in dem betreffenden Faserbündel) erreicht werden. Bei den Untersuchungen, die zu der vorliegenden Erfindung geführt haben, wurde jedoch festgestellt, dass die so erhaltenen Faserbündel bei einem nachfolgenden Mischprozess zur Herstellung von faserverstärkten Kunststoffen oder faserverstärkten Kunstharzen zum Zerfallen neigen, wobei sich zwar die Länge der Faserbündel nicht oder nur unwesentlich ändert, jedoch die Breite, also die Ausdehnung senkrecht zur Faserrichtung, merklich abnimmt. Dieser Zerfall tritt sowohl beim Mischen mit partikulären Feststoffen wie Thermoplasten, duroplastischen Kunstharzen, Füllstoffen, als auch mit flüssigen Kunstharzen oder Pechen, und Kombinationen beliebiger dieser festen und flüssigen Stoffe auf und ist besonders ausgeprägt beim Mischen mit pulverförmigen Feststoffen.

Es bestand daher die Aufgabe, solche verfestigten Faserbündel bereitzustellen, die eine verbesserte Festigkeit aufweisen, derart, dass sie beim Mischen mit den oben genannten Stoffen nicht oder nur in unwesentlichem Ausmaß zerfallen. Weiter soll ein Herstellungsverfahren vorgeschlagen werden, welches effizient und kostengünstig derartige verfestigte Faserbündel herzustellen erlaubt. Eine weitere Aufgabe ist auch darin zu sehen, die Lagerungsanforderungen an die imprägnierten Vorstufen der verfestigten Faserbündel zu verbessern, so dass vor allem eine platzsparende Lagerung erfolgen kann.

Diese Aufgaben wurden gelöst durch ein kontinuierliches Verfahren zur Herstellung von verfestigten Faserbündeln, umfassend die Schritte
a) Auftragen einer Schmelze oder Lösung auf eine flächige Trägerbahn unter Bildung einer viskosen Beschichtung,
b) Aufbringen paralleler Filamente auf diese so beschichtete Trägerbahn unter Zugspannung,
c) Eindrücken der Filamente in die viskose Beschichtung unter Bildung eines Imprägnats,
d) optional teilweise Verfestigung der Beschichtung bis zu einem plastisch verformbaren Zustand des Imprägnats durch mindestens einen der Schritte Verdampfen des Lösungsmittels, thermische Härtung und Abkühlung, wobei diese Schritte nur in dem Maß ausgeführt werden, dass ein plastisch verformbarer Zustand erhalten bleibt, wobei insbesondere durch eine Druckvorrichtung während oder nach dem Verfestigen der Beschichtung eine Kraft direkt oder indirekt auf das Imprägnat ausgeübt wird,
e) Aufrollen des Imprägnats auf einen Wickelkern zu einem Wickel unter Beibehaltung einer Wickelspannung der Filamente in dem Imprägnat,
f) optional Fixierung des Wickels auf dem Wickelkern mittels wenigstens einer Manschette und/oder durch wenigstens ein Klebeband,
g) Verfestigung des Imprägnats durch mindestens einen der Schritte Verdampfen des Lösungsmittels, thermische Härtung und Abkühlung, und
h) Zerteilen des verfestigten Imprägnats, insbesondere parallel und senkrecht zur Filamentrichtung, zur Bildung von verfestigten Faserbündeln,
wobei während der Ausführung von Schritt g) ein Druck auf den Wickel ausgeübt wird, der sich durch die Wickelspannung der Filamente in dem Imprägnat ergibt.

Weiter wurden die Aufgaben gelöst durch verfestigte Faserbündel, die durch ein solches Verfahren erhältlich sind.

Ein Imprägnat soll hier wie auch im Folgenden als eine Anordnung von wenigstens teilweise mit einer Impränierung versehenen Filamenten oder Fasern verstanden werden. Eine vollständige Imprägnierung im Sinne einer vollständigen Beschichtung der Filamente oder Fasern ist demnach nicht erforderlich.

Im einzelnen wird bei dem erfindungsgemäßen Verfahren zunächst eine Schmelze oder Lösung, bevorzugt eine Polymerschmelze oder eine Polymerlösung, in Form einer viskosen Beschichtung auf eine flächige Trägerbahn, bevorzugt eine Folie oder eine Papierbahn, aufgetragen, wobei die flächenbezogene Masse des aufgetragenen Stoffes bevorzugt 80 g/m² bis 400 g/m² beträgt, besonders bevorzugt 100 g/m² bis 200 g/m². Im Fall der Verwendung einer Schmelze wird bevorzugt eine Schmelze eines thermoplastischen Kunststoffs oder eines duroplastischen Kunstharzes oder eines Pechs oder eines Zuckers eingesetzt. Im Fall der Verwendung einer Lösung wird bevorzugt eine Lösung eines thermoplastischen Kunststoffs oder eines duroplastischen Kunstharzes oder eines Pechs oder eines Zuckers eingesetzt.

Auf diese so beschichtete Trägerbahn werden parallel angeordnete Filamente, etwa von einem Gelege umfasst, beispielsweise aus einer Schäreinrichtung unter Zugspannung abgelegt, wobei die Filamente anschließend beispielsweise beim Durchgang durch ein Walzenpaar eines Kalanders in die viskose Beschichtung eingedrückt und dadurch gebunden werden. Im Fall der Verwendung eines Kunstharzes, also eines Duroplasten, als Beschichtungsmaterial wird dieses Kunstharz bei der nachfolgenden Passage des mehrlagigen Gebildes, bestehend aus einer Trägerbahn mit einem Belag, der parallele, in Transportrichtung weisende Filamente eingebettet in eine Schmelze oder in eine viskose Lösung enthält, optional in einer Beheizungseinrichtung zumindest teilweise gehärtet, durch Verdampfen des Lösungsmittels und/oder durch Vernetzungsreaktion des Duroplasten. Nach dem Verlassen der Beheizungseinrichtung kann in einer bevorzugten Variante vor einem zweiten Walzenpaar von der der Trägerbahn gegenüber - liegenden Seite eine Deckbahn zugeführt werden, die auf der üblicherweise noch formbaren und noch viskosen Beschichtung, d.h. zur Imprägnierung geeigneten Beschichtung, haftet. Die so entstandene bedeckte oder unbedeckt gebliebene gebundene, auf die Trägerbahn aufgebrachte Filamentschicht kann anschließend in bevorzugter Weise über einen Kühltisch weiter transportiert werden. Sie kann nun entweder direkt auf einen Wickelkern aufgerollt werden oder in bevorzugter Weise zuerst in einer Schneideinrichtung in Längsrichtung der Filamente in einzelne schmalere Bahnen geschnitten, also zerteilt werden entsprechend der gewünschten Breite der zu erzeugenden Faserbündel. In beiden Fällen werden anschließend die Bahnen auf Wickelkerne oder Spulen aufgewickelt. Als Wickelkerne werden bevorzugt Papphülsen, beispielsweise solche mit einem Durchmesser von 300 mm, verwendet. Hierbei behalten die Filamente eine vorbestimmte Wickelspannung bei, welche weiterhin in dem Wickel einen Zusammenhalt der Bahnen unterstützt. Die Wickelspannung ergibt sich dadurch, dass bei dem Aufwickelvorgang eine Zugspannung auf die Faserbündel aufgebracht wird, also die Faserbündel unter Zugspannung auf die Wickelkerne aufgewickelt werden. Die Wickelspannung wird zudem auch durch die Festigkeit des Imprägnats unterstützt, welche aus der Zugspannung resultiert, mit welcher die Filamente während dem Ablegen unter Zugspannung auf der beschichteten Trägerbahn zur Ausformung des Imprägnats beaufschlagt werden.

Es ist möglich, eine Teilung gemäß der gewünschten Faserbündelbreite vor oder erst nach einem nachfolgend als optional beschriebenen Fixierschritt sowie vor oder auch nach einem nachfolgend beschriebenen Härtungsschritt vorzunehmen. In dem letzteren Fall wird die gesamte auf der Trägerbahn gebundene Filamentschicht in der vollen Breite aufgewickelt.

Wird die Teilung der auf der Trägerbahn aufgebrachten gebundenen Filamentschicht vor dem optionalen Fixierschritt bzw. dem Härtungsschritt vorgenommen, so wird bevorzugt die Deckbahn nach diesem Teilungsschritt aufgelegt, wobei diese einen Überstand auf jeder Seite der Teilbahn über die Breite der Teilbahn von mindestens 1 mm, bevorzugt mindestens 2 mm, und insbesondere mindestens 5 mm aufweist. In diesem Fall wird die Aufwicklung so vorgenommen, dass die Seite der Teilbahn mit der Deckbahn nach innen weist, also zum Spulenkörper hin.

Der nun folgende Verfahrensschritt, bei dem die gebildeten Wickel optional fixiert bzw. verfestigt werden, ergibt gemäß den im Rahmen der Erfindung durchgeführten Untersuchungen die Verbesserung der Stabilität der Faserbündel. Die Trägerbahn mit der beschichteten Filamentlage, d.h. das Imprägnat (nachfolgend auch als "Prepreg" bezeichnet) wird auf den Spulen oder Wickelkernen in der gewünschten Länge aufgewickelt, optional mit einer Manschette oder mit wärmebeständigem Klebeband fixiert und im Fall der Verwendung von Thermoplasten oder anderen schmelzbaren Stoffen unter deren Schmelztemperatur abgekühlt, oder im Fall der Verwendung von wärmehärtenden, duroplastischen Stoffen, zum Aushärten der Duroplastschicht in eine Beheizungseinrichtung gebracht, wobei der nach Art und Masse des Kunstharzes oder Duroplasten geeignete Temperaturbereich und die erforderliche Verweilzeit eingestellt werden. Die Beheizungseinrichtung zum Aushärten wird bei Verwendung eines Ofens bevorzugt im Umluftverfahren betrieben, ebenso können andere Beheizungsmöglichkeiten wie Mikrowellenheizung, Infrarotheizung oder Induktionsheizung bei leitfähigen Filamenten aus Kohlenstoff, benutzt werden. Die Aushärtebedingungen wie Temperatur und Veniveilzeit richten sich in üblicher Weise nach der Masse des auszuhärtenden Materials, dem Energieeintrag durch die Beheizungseinrichtung, und der chemischen Zusammensetzung (Reaktivität) des wärmehärtbaren Stoffs. Selbstverständlich ist hier auch eine kontinuierliche Betriebsweise beispielsweise mit einem Durchlaufofen möglich.

Entscheidend ist dabei, dass während der Härtung (im Fall von Duroplasten) oder der Abkühlung (im Fall von Thermoplasten) Druck auf den zu härtenden Wickel ausgeübt wird. Dieser Druck ergibt sich durch die Wickelspannung der Filamente in dem Imprägnat und wird entsprechend einer bevorzugten Ausführungsform durch eine Fixierung der Wickel mit einer Manschette oder durch Klebeband aufrechterhalten. Bevorzugt beträgt die auf den Wickel aufgebrachte Kraft im Fall von mit Kunstharzen, also Duroplasten, gebundenen Filamenten aus Kohlenstoff, 10 N bis 1500 N, besonders bevorzugt 100 N bis 1000 N, und insbesondere 450 N bis 800 N. Bei einer Länge der Spule von 500 mm und einem Kerndurchmesser von 300 mm entspricht dies einem Druck auf die Mantelfläche von 0,5 kPa bis 2 kPa. Die Einhaltung eines Drucks in dieser Größenordnung ist wesentlich zur Erzielung der für die weitere Verarbeitung erforderlichen Haftung zwischen den Filamenten und der Matrix. Insbesondere ist die Wickelspannung so zu wählen, dass mindestens ein Druck von 0,5 kPa, bevorzugt mindestens von 1,0 kPa aufgebaut wird.

Durch die Erhöhung der Temperatur in der Beheizungseinrichtung tritt im Fall der Verwendung von Duroplasten oder diese enthaltenden Mischungen eine Erweichung ein, wobei die durch die genannte Kraft bewirkte Wickelspannung einen Fließprozess in Gang setzt, der die Gleichmäßigkeit der Imprägnierung und die Benetzung der Filamente mit dem Imprägniermittel weiter verbessert. Diese homogene Struktur wird durch das nachfolgende Aushärten fixiert.

Sind die Filamente mit Thermoplasten oder anderen schmelzbaren Stoffen wie Pechen gebunden, so genügt ein Abkühlen und Verfestigen, ebenfalls unter Druck auf den Wickel. Es hat sich ergeben, dass Mischungen durch Einwirkung von Wärme härtbar sind, die mindestens einen Massenanteil von 30 % an einem wärmehärtbaren, also duroplastischen, Stoff enthalten, wobei die Untergrenze von der Art des Duroplasten und der anderen in der Mischung enthaltenden Stoffe abhängig ist. Beispielsweise sind Mischungen von Phenolharzen und Pechen, die einen Massenanteil von mindestens 30 % an Phenolharzen enthalten, ebenfalls wärmehärtbar, wobei im Fall von Novolaken Härtungsmittel zugegeben werden, was bei der Verwendung von Phenolresolharzen nicht erforderlich ist.

Ausgehend von den (ausgehärteten oder durch Abkühlen verfestigten) Wickeln werden gemäß einer der oben genannten Ausführungsformen durch Längsschneiden, also parallel zur Filamentrichtung, Filamentbänder gefertigt, oder Filamentbänder werden von den Spulen oder Wickeln abgewickelt, und in beiden Fällen werden die verfestigten Filamentbänder dann zu einer Querschneideeinrichtung geführt, in der sie auf die gewünschte Länge (senkrecht zur Filamentrichtung) geschnitten werden und so die gewünschten Faserbündel bilden.

Nach dem Aushärten können die Prozessbahnen, also Papiere oder Folien als Trägerbahn oder Deckbahn, durch Umspulen von den ausgehärteten gebundenen Filamentlagen entfernt werden, wie es in dem nachfolgenden Anwendungsbeispiel durchgeführt wurde. Dadurch wird eine Weiterverwendung (Recycling) bzw. kommerzielle Weiterverwertung (Downcycling) von Trägerbahnen und Deckbahnen möglich. Alternativ können die Trägerbahnen und Deckbahnen im nachfolgenden Prozessschritt bei der Weiterverarbeitung entfernt werden. Werden Trägerbahn und Deckbahn gemeinsam mit dem gehärteten Prepreg zerteilt, so können sie auch als Zuschlagstoff im Produkt verbleiben.

Die Breite der Filamentbänder, erhalten durch Teilung in Längs- also Filament-Richtung, liegt zwischen 0,1 mm und bis zu 20 mm, und ist bevorzugt im Bereich von 0,5 mm bis 3 mm. Das Ablängen in der Querrichtung, also senkrecht zur Richtung der Filamente oder Fasern, erfolgt durch ein Schneid- und/oder Stanzverfahren und ergibt die gewünschten verfestigten Faserbündel. Deren Länge kann beispielsweise von 2 mm bis 50 mm reichen und ist bevorzugt 3 mm bis 20 mm.

Von Filamenten wird hier wie üblich gesprochen, wenn endlose (also in ihrer Länge nur durch die Kapazität der Spulen begrenzte) Einzelfäden oder mehrere parallele Fäden gemeint sind; von Fasern wird hier gesprochen, wenn einzelne oder mehrere vorwiegend parallele Fäden mit begrenzter Länge gemeint sind, wobei die Längen im Fall von synthetisch hergestellten Fasern üblicherweise durch einen Schneidprozess bestimmt sind.

Nach dem Abkühlen und Schneiden der verfestigten Wickel liegen harte, also formstabile gebundene Faserlagen vor, die als gehärtete Prepregs bezeichnet werden. Länge und Breite dieser gehärteten Prepreg-Abschnitte sind durch die Schneidvorgänge bei ihrer Herstellung definiert.

Diese verfestigten Faserbündel weisen parallel gelegte Fasern auf, eingebettet in eine feste Matrix, insbesondere eine Thermoplast- oder Kunstharz-Matrix, wobei die Matrix durch Abkühlen unterhalb der Schmelz- oder Glasübergangstemperatur (bei Thermoplasten) oder durch Härten (bei Kunstharzen oder Duroplasten) verfestigt ist.

Aufgrund der Verfestigung sowie aufgrund der Aufwicklung auf einen Wickelkern weisen die verfestigten imprägnierten Faserlagen zudem eine Krümmung auf, welche auch eine Krümmung der verfestigten Faserbündel zur Folge hat. Demnach können die verfestigten Faserbündel ebenfalls eine bei bloßer Betrachtung mit dem Auge noch erkennbare Krümmung aufweisen, selbst mitunter dann, wenn sie von dem Wickelkörper abgewickelt und geschnitten bzw. gestanzt wurden. Durch nachfolgende Glättungsverfahren, ausgeführt etwa mit einer Glättungsvorrichtung integriert in eine Schneidvorrichtung oder durch mechanisches Strecken nach dem Abwickeln von dem Wickel, kann diese Krümmung vermindert oder sogar vermieden werden.

Derartige verfestigte Faserbündel lassen sich mit Vorzug zur Herstellung von faserverstärkten Keramikwerkstoffen verwenden, insbesondere zur Herstellung der sogenannten C/SiC-Werkstoffe, die heute besonders für Brems- und Kupplungsscheiben eingesetzt werden. Weitere Anwendungen sind Verstärkungsmittel in synthetischen Kohlenstoff-Werkstoffen beispielsweise für Elektroden in Schmelzöfen oder in Elektrolyseanwendungen, bei Armierung von Beton, oder bei Verstärkung von Werkstoffen für antiballistische Schutzeinrichtungen.

Diese verfestigten Faserbündel zeichnen sich durch folgende Eigenschaften aus:
- sehr geringe Schwankungen in der flächenbezogenen Masse und im flächenbezogenen Massenanteil der Fasern, im Harzgehalt sowie in der geringen Bildung von Spalten über ihre Breite,
- der flächenbezogene Massenanteil der Fasern in den Faserbündeln liegt im Bereich von 50 g/m² bis zu 800 g/m², bevorzugt von 100 g/m² bis zu 350 g/m², und insbesondere von 200 g/m² bis 300 g/m²,
- die Harzgehalte können mit einer Genauigkeit von ± 3 %, höchstens aber ± 5 %, bei einem Massenanteil an Kunstharz von 40 % und einer flächenbezogenen Masse des Imprägnats von 400 g/m² eingestellt werden; ohne den Schritt der Aushärtung unter Spannung beträgt die Schwankungsbreite ± 15 %
- verbesserte Rieselfähigkeit im geschnittenen Zustand: bei der Dosierung über Schüttelrinnen treten keine Zusammenballungen und Klumpen auf, der Schüttwinkel ist gegenüber Prepreg-Abschnitten mit derselben Längen- und Breitenverteilung, die ohne den Schritt der Aushärtung unter Spannung hergestellt wurden, um etwa die Hälfte geringer,
- geringer Massenanteil von Stäuben unter 1 %, insbesondere Feinstäuben und Aerosolen, beim Schneiden und im geschnittenen Zustand,
- hohe Schneidscherfestigkeit (querschnittsbezogene Spaltkraft) innerhalb der getränkten und verfestigten Prepreg-Abschnitte oder Faserbündel, von 70 MPa bis 150 MPa im verfestigten bzw. ausgehärteten Zustand (mit Bündeln gemäß dem Stand der Technik, wie er sich aus der Patentanmeldung EP 1 645 671 A1 ergibt, wurden nur ca. 35 MPa bis ca. 55 MPa erreicht)
- gleichmäßige Imprägnierung der Faserbündel, die zu einer hohen Stampfdichte führt, im Fall von mit Phenolharz gebundenen Kohlenstoff-Filamenten lassen sich Werte für die Stampfdichte erreichen, die um 20 % bis 25 % höher liegen als ohne den Schritt der Aushärtung unter Spannung.

Als Rohstoffe für die erfindungsgemäßen Faserbündel können bevorzugt Filamente aus Kohlenstoff, aus keramischen Materialien wie Siliciumcarbid, Siliciumnitrid, Siliciumcarbonitrid, Silicium-Bor-Carbonitrid, die durch Pyrolyse von siliciumorganischen Polymeren auf bekannte Weise erhältlich sind, aus aromatischen Polyamiden (Aramiden), aus thermotropen flüssigkristallinen Polymeren, insbesondere aromatischen Copolyestern auf Basis von Hydroxybenzoesäure oder Hydroxynaphthoesäure, aus Glas, und auch dünne Metalldrähte eingesetzt werden. Besonders bevorzugt sind Filamente aus Kohlenstoff. Der Werkstoff für das Bindemittel oder die Matrix ist bevorzugt ein Polymer, das duroplastisch oder thermoplastisch sein kann. Es ist auch möglich, niedermolekulare organische Stoffe zu verwenden, die wie Thermoplaste als Schmelze aufgetragen werden und den Faserbündeln im abgekühlten Zustand ausreichende Festigkeit verleihen, wie beispielsweise Peche und/oder Zucker. Ebenfalls verwendbar sind die sogenannten präkeramischen Polymere, die im gehärteten Zustand die Faserbündel stabilisieren, und bei deren Verwendung die Faserbündel nach dem Schneiden und Einarbeiten in einen Werkstoff durch thermische Behandlung in eine keramische Phase überführt werden, insbesondere Polysilazane, Polyborsilazane, Polycarbosilazane, und Polyborcarbosilazane, die durch eine thermische Behandlung in Siliciumnitrid, Siliciumbornitrid, Siliciumcarbonitrid, und Siliciumborcarbonitrid überführt werden können. Diese in den Faserbündeln parallel ausgerichteten Verstärkungsfasern liegen in einer Matrix vor, die aus Polymeren besteht (zum Beispiel aus Phenol-, Epoxid-, Cyanatester-, Polyester-, Vinylester-, Benzoxazinharz oder Mischungen dieser Harze, die mindestens zu einem Massenanteil von 10 % aus einer der genannten Komponenten bestehen), oder thermoplastischen Materialien (z. B. Pechen, Polyimiden, Polyetherimiden, Polyamiden, Polyketonen), den oben genannten präkeramischen Polymeren, Kohlenstoff oder keramischen Werkstoffen (zum Beispiel CSiC, also mit Carbonfasern verstärktem Siliciumcarbid). Weiterhin können die zuvor angeführten Polymere Füllstoffe wie Ruße, Graphite oder Nanopartikel (zum Beispiel Kohlenstoffnanotubes, Kohlenstoffnanofasern) enthalten. Besonders bevorzugt wird als Bindemittel eine viskose Lösung eines Phenolharzes verwendet.

Die so hergestellten Faserbündel können auch zur Verstärkung von thermoplastischen oder duroplastischen Kunststoffen genutzt werden, wobei die Faserbündel bevorzugt mit Pulvern oder Granulat der betreffenden Kunststoffe als Matrixmaterial gemischt und anschließend beispielsweise durch Pressen verformt werden. Es ist auch möglich, die erfindungsgemäßen Faserbündel in einem Kneter (zum Beispiel in einem diskontinuierlich betriebenen Z-Arm-Kneter) oder in einer Schneckenpresse (kontinuierlich betriebener Extruder) mit dem Matrixmaterial zu mischen, gegebenenfalls unter Zusatz der oben genannten Füllstoffe. Der Zusatz der erfindungsgemäßen verfestigten Faserbündel bewirkt eine erhebliche Verbesserung der Festigkeit und der Steifigkeit der damit hergestellten Formteile.

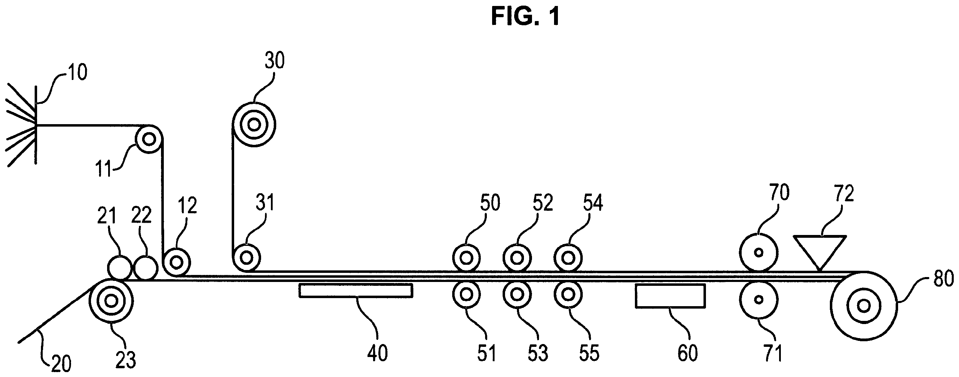

Eine für das Verfahren zur Herstellung der erfindungsgemäßen verfestigten Faserbündel geeignete Anlage ist in der Abbildung Fig. 1 schematisch dargestellt. Dabei zeigt
- Fig. 1: eine Anlage zur Herstellung der Wickel, die erfindungsgemäß unter Zugspannung aufgerollt werden, und unter Zug und dem dadurch erzeugten Druck durch Wärmehärtung (im Fall von duroplastischen Bindemitteln) oder durch Abkühlen (im Fall von thermoplastischen, also in der Wärme erweichenden Bindemitteln) verfestigt werden.

Im einzelnen ist mit **10** eine Schäreinrichtung bezeichnet, aus der eine Schar von parallelen Filamenten in gleichmäßiger Lagendicke über die Breite der Schar über ein Rollenpaar **11** und **12** geführt wird. Von einer nicht im Detail dargestellten Abwickelstation kommt eine Trägerbahn **20,** die über eine Andruckwalze **23** an ein Walzenpaar **21,22** geführt wird. Die Walzen **21, 22** schließen mit ihren Mantelflächen einen schmalen, in der Dicke durch Relativbewegung der Achsen dieser beiden Walzen veränderbaren Spalt ein, wobei von oben zwischen die beiden Walzen ein Bindemittel in flüssiger Form gefüllt wird. Dabei wird die Viskosität des Bindemittels so gewählt, dass der Auftrag durch den Walzenspalt möglich ist, und dass das Bindemittel nicht von der Trägerbahn abfließt, sondern eine Schicht auf dieser bildet. In einer bevorzugten Ausführungsform sind die beiden Walzen **21** und **22** beheizbar, wodurch mittels einer Regeleinrichtung mit kontinuierlicher Viskositätsmessung und Temperatursteuerung eine konstante Viskosität des Bindemittels sichergestellt werden kann. Durch Drehung des Walzenpaars gegeneinander wird ein gleichmäßiger Film des Bindemittels von oben auf die Trägerbahn aufgezogen. In einer bevorzugten Ausführungsform wird die Walze **22** nicht gedreht und die Walze **21** wird so gedreht, dass ihr Mantelteil nahe der Trägerbahn sich gegen die Transportrichtung der Trägerbahn dreht. Auf diese Weise lässt sich ein möglichst gleichmäßiger Bindemittelfilm auf die Trägerbahn aufbringen. Über die Walze **12** wird die Filamentschar in die Schicht des Bindemittels auf der Trägerbahn **20** eingedrückt. In einer besonderen Ausführungsform kann danach von einer Rolle **30** über eine Umlenkwalze **31** von oben auf die mit dem Bindemittel getränkte Filamentschar eine weitere Bahn als Deckbahn aufgezogen werden. Das "Imprägnat" aus Trägerbahn **20** und der mit dem Bindemittel getränkten Filamentschar, gegebenenfalls mit der von der Rolle **30** aufgebrachten Deckbahn, wird sodann über eine Beheizungseinrichtung, beispielsweise einem hier dargestellten Heiztisch **40** mit flächigem Kontakt mit dem Imprägnat von unten, also der Seite der Trägerbahn, oder einer Infrarotbeheizung von oben, oder in einem Heißluftkanal mit Längs- oder Queranströmung, geführt, mit vorzugsweise mindestens einem Rollenpaar **50** und **51** (in der Fig. 1 als drei Rollenpaare **50** und **51, 52** und **53,** sowie **54** und **55** gezeigt) von oben und unten durch Druck egalisiert, wobei das mindestens eine Rollenpaar vorzugsweise ebenfalls beheizbar ausgeführt ist, danach optional durch eine Kühleinrichtung, hier dargestellt als Kühltisch **60,** geführt, zwischen die als Hauptantrieb eingesetzten Walzen **70** und **71** und durch eine Messeinrichtung **72** für die flächenbezogene Masse geführt und schließlich auf einer Wickelspule **80** aufgerollt. In üblicher Weise ist die Spuleinrichtung mit der Wickelspule **80** so ausgeführt, dass ein automatischer Spulenwechsel möglich ist, damit die Anlage kontinuierlich betrieben werden kann.

Es ist bevorzugt, im Schritt a) eine Lösung oder eine Schmelze einer organischen Substanz zu verwenden, und anschließend an den Schritt h) die verfestigten Faserbündel bei einer Temperatur von 750 °C bis 1300 °C unter Abwesenheit von Oxydationsmitteln zu behandeln, wobei mindestens ein Teil der organischen Substanzen in Kohlenstoff überführt wird. Auf diese Weise lassen sich Faserbündel herstellen, die im Fall des Einsatzes von Filamenten aus Kohlenstoff aus mit Fasern aus Kohlenstoff verstärktem porösen Kohlenstoff bestehen. Durch Schneiden (Zerteilen) der Filamente senkrecht zur Richtung der Filamente erhält man geeignete Fasern.

Die erfindungsgemäß hergestellten verfestigten Faserbündel werden bevorzugt als Verstärkungsmittel für thermoplastische Kunststoffe oder für duroplastische Kunstharze verwendet. Solche mit den erfindungsgemäß hergestellten verfestigten Carbon-Faser-Bündeln verstärkten thermoplastischen Kunststoffe oder duroplastischen Kunstharze können bei einer Temperatur von 750 °C bis 1300 °C unter Abwesenheit von Oxydationsmitteln behandelt werden, wobei mindestens ein Teil der thermoplastischen Kunststoffe oder duroplastischen Kunstharze durch Carbonisierung in Kohlenstoff überführt wird. Werden Formkörper aus solchen mit erfindungsgemäß hergestellten verfestigten Carbon-Faser-Bündeln verstärkten thermoplastischen Kunststoffen oder duroplastischen Kunstharzen bei einer Temperatur von 750 °C bis 1300 °C unter Abwesenheit von Oxydationsmitteln behandelt, wobei mindestens ein Teil dieser thermoplastischen Kunststoffe oder duroplastischen Kunstharze durch Carbonisierung in Kohlenstoff überführt wird, und die so erhaltenen carbonisierten Formkörper anschließend durch Infiltration mit flüssigen oder gasförmigen carbidbildenden Elementen oberhalb von deren Schmelz- oder Verdampfungstemperatur unter Bildung von Carbiden dieser Elemente behandelt, so werden Formkörper erhalten, die als Verstärkungsmittel Carbonfasern enthalten, und deren Matrix Carbide der zur Infiltration eingesetzten Elemente sowie gegebenenfalls nicht umgesetzte Reste des durch die Carbonisierung gebildeten Kohlenstoffs und/oder der zur Infiltration eingesetzten Elemente enthält. Im Fall der Verwendung von Silicium als carbidbildendem Element werden so Formköper aus CSiC erhalten, also aus mit Carbonfasern verstärktem Siliciumcarbid, deren Matrix zusätzlich noch Reste von nicht umgesetztem Kohlenstoff und/oder nicht umgesetztem Silicium enthält.

Besonders vorteilhaft ist es, als Bindemittel Mischungen aus duroplastischen Kunstharzen mit mindestens einem weiteren Bestandteil ausgewählt aus Pechen und partikulärem Kohlenstoff einzusetzen.

Die Erfindung wird im folgenden Beispiel näher erläutert. Das beschriebene Verfahren besteht aus mehreren Teilschritten, die in ihrer Gesamtheit zu den erfindungsgemäßen Faserbündeln führen.

### 1 Herstellung von Prepregs

Es wurde ein unidirektionales Prepreg hergestellt, wobei zunächst ein flüssiges Phenolresolharz (Massenanteil an bei 135 °C während 60 min nichtflüchtigen Stoffen ca. 71 %, Viskosität nach Höppler bei 20 °C gemäß ISO 9371 bestimmt: 750 mPa s, ®Norsophen 1203, Hexion Specialty Chemicals) auf ein mit Silikon beschichtetes Papier mit einer Breite von 1100 mm als Trägerbahn aufgetragen wurde. Die flächenbezogene Masse der Trägerbahn betrug 90 g/m², die Dicke des beschichteten Papiers war 0,07 mm. Die Harzauftragsmenge wurde so eingestellt, dass sich eine flächenbezogene Harzmasse im Prepreg von 190 g/m² mit einer zu ± 3 % bestimmten Schwankungsbreite ergab. In einem Abstand von 1800 mm nach der Harzauftragung wurden flächig ausgebreitete 50 k-Kohlenstoff-Filamente (®Sigrafil C30 T050 EPY, SGL Carbon SE, ca. 50000 Filamente je Bündel) mit einer Einzelfilamentdicke von ca. 7 µm auf einmal zugeführt, wobei die flächenbezogene Masse durch die zugeführten Carbonfilamente um 285 g/m² (mit derselben Schwankungsbreite von ± 3 %) anstieg. Die Breite der erhaltenen mit Harz imprägnierten Filamentlage auf der Trägerbahn betrug ca. 1020 mm.

Bei einer Liniengeschwindigkeit von 3,2 m/min wurde das Material in einem Ofen mit Heiztisch und flächigem Kontakt bei einer Temperatur von 180 °C vorpolymerisiert, wobei die Viskosität durch die Temperaturerhöhung soweit abgesenkt wurde, dass das Harz in die Filamentstränge penetrierte.

Nach Passieren der Beheizungseinrichtung folgten das Verdichten und Abpressen in einem als Kalander wirkenden Walzenpaar, unter Bildung einer Wulst des Harzes vor dem Walzenspalt, die zur Vergleichmäßigung des Prepregs und zum Eindringen des Harzes in die Filamentstruktur führte. Die beheizten Walzen wurden dabei auf eine Temperatur von 100 °C eingestellt.

In diesem Fall hatte es sich als günstig erwiesen, die Deckbahn erst nach dem Passieren des Heiztisches, aber vor dem Durchgang durch das als Kalander wirkende erste Walzenpaar aufzubringen, da auf diese Weise Lösungsmittel und andere flüchtige Stoffe aus der mit Harz imprägnierten Filamentbahn entweichen können. Als Deckbahn wurde dasselbe mit Silikon beschichtete Papier wie das der Trägerbahn verwendet. Der durch das Walzenpaar aufgebrachte Druck wurde auf durch Einstellen der Andruckkraft auf 9,8 kN gewählt. Hierdurch wurde eine gleichmäßige Harzwulst und dadurch ein homogenes und optisch geschlossenes Prepreg erreicht.

Es hat sich in einem weiteren Experiment herausgestellt, dass die Wahl eines definierten Walzenspaltes, hier 0,52 mm, und geringfügiges Nachregeln zur Feinjustierung der flächenbezogenen Masse durch Veränderung des Walzenspaltes mit maximaler Andruckkraft von 39,2 kN auf die Abstandshalter der Spaltverstellung der Kalanderwalzen zu einer verbesserten Gleichmäßigkeit der Massenverteilung des Prepregs führt.

Das aus Deckbahn, Prepreg und Trägerbahn bestehende Imprägnat wurde anschließend über einen auf 30 °C eingestellten Kühltisch geführt, bei der gewählten Liniengeschwindigkeit ergab sich damit eine Abkühlung des Imprägnats auf eine Temperatur von ca. 41 °C im Kern.

Über ein weiteres Walzenpaar, das als Hauptantriebswerk dient, wurde das Imprägnat zur Wickeleinrichtung geführt, wobei durch die kontinuierliche Flächengewichtsmessung gekoppelt mit der Betriebsweise des Kalanders bzw. der Harzauftragung die genannten geringen Schwankungen in der flächenbezogenen Masse erreicht wurden.

Das Imprägnat wurde auf Pappzylinder mit einem Außendurchmesser von 300 mm als Wickelkern mit einer Abzugkraft von 600 N aufgewickelt. Dabei wurde nach jeweils 150 m Wickellänge der Wickelkern gewechselt, die fertigen Wickel wurden durch Umreifen mit einem wärmestabilen Klebeband fixiert und anschließend mit einem Manipulationsarm entnommen und abgelegt.

Der Massengehalt an (vorgehärtetem) Harz im fertigen Imprägnat betrug 41,5 %, bei einem Massenanteil an flüchtigen Bestandteilen von 5,5 %.

### 2 Härtung des Imprägnats

Jeweils 4 solcher Rollen wurden in einem Rahmen von 2 mal 2 Steckplätzen angeordnet, und gemeinsam in einem Umluftofen getrocknet und gehärtet. Dabei wurde das folgende Temperaturprogramm eingehalten:
Aufheizen von Raumtemperatur (23 °C) auf 180 °C mit einer Heizrate von 6 °C/min, Halten bei 180 °C während 150 min,
Abkühlen von 180 °C auf 40 °C innerhalb von 60 min

An diesen ausgehärteten Imprägnaten wurde eine Restfeuchte entsprechend einem Massenanteil von ca. 2,8 % gemessen.

### 3 Schneiden und Stanzen

Die ausgehärteten Imprägnate wurden umgespult, wobei Deckbahn, Trägerbahn und das ausgehärtete Prepreg getrennt von einander aufgewickelt wurden. Anschließend wurden die Rollen mit den ausgehärteten Prepregs auf einer Rollenabstechmaschine mittels eines rotierenden Messers in Teilrollen von 40 mm Breite geschnitten. Durch den beim Rollenteilen verwendeten sogenannten Verdrängungsschnitt betrug der Massenanteil an verlorenem Material in diesem Arbeitsschritt weniger als 0,2 %.

Die so erhaltenen ausgehärteten Prepregstreifen wurden in einer Stanzeinrichtung zu als "Stäbchen" bezeichneten verfestigten Faserbündeln abgelängt, deren Länge und Breite zu über 90 % innerhalb der vorgegebenen Grenzen lagen, nämlich innerhalb einer Breite zwischen 0,8 mm und 1,1 mm und innerhalb einer Länge von 9,0 mm bis 13,5 mm. Im Vergleich zu den gemäß der Anmeldung EP 1 645 671 A1 hergestellten polymergebundenen Fasergelegen liegen diese Anteile von spezifikationsgerechten Werten für Länge und Breite der Stäbchen bei identischen Stanzbedingungen in der Länge um 9 % und in der Breite um 17 % höher.

Die erhaltenen Stäbchen ließen sich über Rüttelrinnen und über Trichter ohne Schwierigkeiten und ohne Pfropfenbildung dosieren.

Die Schneidscherfestigkeit wurde an Stäbchen mit den Maßen 50 mm x 100 mm ermittelt und lag bei 121 MPa. Im Vergleich zu den gemäß der Anmeldung EP 1 645 671 A1 hergestellten polymergebundenen Fasergelegen liegt die Schneidscherfestigkeit um ca. 110 % höher.

Im Vergleich zu den gemäß der Anmeldung EP 1 645 671 A1 hergestellten polymergebundenen Fasergelegen ist die Gesamtfläche von nicht imprägnierten Bereichen im Querschnitt zwischen einzelnen Filamenten bei den gemäß der vorliegenden Anmeldung hergestellten Stäbchen mit denselben Maßen für Länge und Breite um mindestens 20 % geringer. Dies wurde durch Bildanalyse an lichtmikroskopisch und elektronenmikroskopisch vergrößerten Schnitten durch solche Stäbchen bestimmt.

Weitere Vergleichsversuche wurden an Stäbchen gemäß dem Beispiel dieser Anmeldung und Stäbchen gemäß der Anmeldung EP 1 645 671 A1 angestellt, wobei die Stäbchen in Abwesenheit von oxydierenden Agenzien bei 900 °C bis zur Gewichtskonstanz behandelt wurden, wobei das (in beiden Fällen identische benutzte) ausgehärtete Phenolharz zu einer porösen Kohlenstoffmatrix umgewandelt wurde. Die Porosität der Stäbchen wurde verglichen, wobei in carbonisierten Stäbchen gemäß der vorliegenden Anmeldung eine Porosität von 28 % gemessen wurde, und bei Stäbchen gemäß der Anmeldung EP 1 645 671 A1 eine Porosität von 45 % gefunden wurde. Je größer die Dichte der Harzmatrix ist, umso geringer ist die nach der Carbonisierung gemessene Porosität. Auch hieraus ergibt sich, in quantitativer Skala, die bessere Imprägnierung bei dem Verfahren gemäß der vorliegenden Anmeldung.

### Bezugszeichenliste

- 10: Faserzuführung
- 11, 12: Umlenkwalzen
- 20: Trägerbahn
- 21: Auftragswalze
- 22: feste Walze
- 23: Umlenkwalze für Trägerbahn
- 30: Deckbahn
- 31: Umlenkwalze für Deckbahn
- 40: Heiztisch
- 50, 51, 52, 53, 54, 55: Walzensatz
- 60: Kühltisch
- 70, 71: Abzugswalzen (Hauptantrieb)
- 72: Messeinrichtung für die flächenbezogene Masse
- 80: Wickel

## Patentansprüche

1. Verfahren zur Herstellung von verfestigten Faserbündeln, umfassend die Schritte
a) Auftragen einer Schmelze oder Lösung auf eine flächige Trägerbahn unter Bildung einer viskosen Beschichtung,
b) Aufbringen paralleler Filamente auf diese so beschichtete Trägerbahn unter Zugspannung,
c) Eindrücken der Filamente in die viskose Beschichtung unter Bildung eines Imprägnats,
d) optional teilweise Verfestigung der Beschichtung bis zu einem plastisch verformbaren Zustand des Imprägnats durch mindestens einen der Schritte Verdampfen des Lösungsmittels, thermische Härtung und Abkühlung, wobei diese Schritte nur in dem Maß ausgeführt werden, dass ein plastisch verformbarer Zustand erhalten bleibt, wobei insbesondere durch eine Druckvorrichtung während oder nach dem Verfestigen der Beschichtung eine Kraft direkt oder indirekt auf das Imprägnat ausgeübt wird,
e) Aufrollen des Imprägnats auf einen Wickelkern zu einem Wickel unter Beibehaltung einer Wickelspannung der Filamente in dem Imprägnat,
f) optional Fixierung des Wickels auf dem Wickelkern mittels wenigstens einer Manschette und/oder durch wenigstens ein Klebeband,
g) Verfestigung des Imprägnats durch mindestens einen der Schritte Verdampfen des Lösungsmittels, thermische Härtung und Abkühlung, und
h) Zerteilen des verfestigten Imprägnats, insbesondere parallel und senkrecht zur Filamentrichtung, zur Bildung von verfestigten Faserbündeln,
wobei während der Ausführung von Schritt g) ein Druck auf den Wickel ausgeübt wird, der sich durch die Wickelspannung der Filamente in dem Imprägnat ergibt.

2. Verfahren nach Anspruch 1, **dadurch gekennzeichnet, dass** die viskose Schmelze eine Schmelze eines thermoplastischen Kunststoffs, eines duroplastischen Kunstharzes, eines Pechs und/oder eines Zuckers ist.

3. Verfahren nach Anspruch 1, **dadurch gekennzeichnet, dass** die Lösung eine Lösung eines thermoplastischen Kunststoffs, eines duroplastischen Kunstharzes, insbesondere eines Phenolharzes, eines Pechs und/oder eines Zuckers ist.

4. Verfahren nach einem der vorhergehenden Ansprüche, **dadurch gekennzeichnet, dass** das Imprägnat vor dem Schritt e) in Streifen parallel zur Filamentrichtung durch Schneiden mit einer Schneideinrichtung aufgeteilt wird.

5. Verfahren nach einem der vorhergehenden Ansprüche, **dadurch gekennzeichnet, dass** das verfestigte Imprägnat vor dem Schritt h) in Teilrollen parallel zur Filamentrichtung durch Schneiden mit einer Schneideinrichtung aufgeteilt wird.

6. Verfahren nach einem der vorhergehenden Ansprüche, **dadurch gekennzeichnet, dass** unmittelbar nach dem Schritt d) das Imprägnat mit einer Deckbahn bedeckt wird.

7. Verfahren nach einem der vorhergehenden Ansprüche, **dadurch gekennzeichnet, dass** die Filamente Kohlenstoff-Filamente umfassen.

8. Verfahren nach einem der vorhergehenden Ansprüche, **dadurch gekennzeichnet, dass** im Schritt a) eine Lösung oder eine Schmelze einer organischen Substanz verwendet wird, und anschließend an den Schritt h) die verfestigten Faserbündel bei einer Temperatur von 750 °C bis 1300 °C unter Abwesenheit von Oxydationsmitteln behandelt werden, wobei mindestens ein Teil der organischen Substanz in Kohlenstoff überführt wird.

9. Verfestigte Faserbündel, erhältlich durch ein Verfahren nach einem der Ansprüche 1 bis 8.

10. Verfestigte Faserbündel nach Anspruch 9,
**dadurch gekennzeichnet, dass**
die Breite der Faserbündel, gemessen als Mittelwert der jeweils größeren räumlichen Erstreckung der Faserbündel senkrecht zum mittleren Vektor in Richtung des Längsverlaufs der Filamente in dem betreffenden Faserbündel zwischen 0,1 mm und 20 mm, bevorzugt zwischen 0,5 mm und 3 mm beträgt, und die Länge der Faserbündel, gemessen als Mittelwert der räumlichen Erstreckung der Faserbündel parallel zum mittleren Vektor in Richtung des Längsverlaufs der Filamente in dem betreffenden Faserbündel zwischen 2 mm und 50 mm, bevorzugt zwischen 3 mm und 20 mm beträgt.

11. Verfestigte Faserbündel nach einem der Ansprüche 9 oder 10,
**dadurch gekennzeichnet, dass**
die Dicke der Faserbündel, gemessen als Mittelwert der jeweils kleineren räumlichen Erstreckung der Faserbündel senkrecht zum mittleren Vektor in Richtung des Längsverlaufs der Filamente in dem betreffenden Faserbündel zwischen 0,05 mm und 2 mm, bevorzugt zwischen 0,1 mm und 0,5 mm beträgt.

12. Verwendung der nach einem Verfahren gemäß einem der vorhergehenden Ansprüche 1 bis 8 hergestellten verfestigten Faserbündel als Verstärkungsmittel für thermoplastische Kunststoffe und/oder für duroplastische Kunstharze.

13. Verwendung nach Anspruch 12, **dadurch gekennzeichnet, dass** die mit den verfestigten Faserbündeln verstärkten thermoplastischen Kunststoffe oder duroplastischen Kunstharze bei einer Temperatur von 750 °C bis 1300 °C unter Abwesenheit von Oxydationsmitteln behandelt werden, wobei mindestens ein Teil der thermoplastischen Kunststoffe oder duroplastischen Kunstharze durch Carbonisierung in Kohlenstoff überführt wird.

14. Formkörper, welcher dadurch erhältlich ist, dass mit den Verfahren nach Ansprüchen 1 bis 8 hergestellten verfestigten Faserbündeln zu einem Formkörper geformte, verstärkte thermoplastische Kunststoffe und/oder zu einem Formkörper geformte, duroplastische Kunstharze bei einer Temperatur von 750 °C bis 1300 °C unter Abwesenheit von Oxydationsmitteln behandelt werden, wobei mindestens ein Teil der thermoplastischen Kunststoffe und/oder duroplastischen Kunstharze durch Carbonisierung in Kohlenstoff überführt wird, und die carbonisierten Formkörper durch Infiltration mit flüssigen oder gasförmigen carbidbildenden Elementen, insbesondere oberhalb von deren Schmelz- oder Verdampfungstemperatur, unter Bildung von Carbiden dieser Elemente behandelt werden.

15. Verwendung der nach den Verfahren von Ansprüchen 1 bis 8 hergestellten verfestigten Faserbündel als Verstärkungsmittel, wobei die verfestigten Faserbündel aus Kohlenstoff-Filamenten hergestellt werden, und wobei sie als Verstärkungsmittel in Mischungen mit duroplastischen Kunstharzen mit mindestens einem weiteren Bestandteil ausgewählt aus Pechen und partikulärem Kohlenstoff eingesetzt werden.

16. Verwendung nach Anspruch 15, **dadurch gekennzeichnet, dass** die mit dem Verstärkungsmittel versehenen Mischungen zu Formkörpern verarbeitet werden, die anschließend bei einer Temperatur von 750 °C bis 1300 °C unter Abwesenheit von Oxydationsmitteln behandelt werden, wobei mindestens ein Teil der duroplastischen Kunstharze und der Peche durch Carbonisierung in Kohlenstoff überführt wird.

## Claims

1. Method for producing solidified fibre bundles, comprising the steps of:
a) applying a melt or solution to a planar carrier web, thereby forming a viscous coating,
b) applying parallel filaments under tensile stress to said carrier web coated in this manner,
c) pressing the filaments into the viscous coating, thereby forming an impregnate,
d) optionally partially solidifying the coating until a plastically deformable state of the impregnate is reached by means of at least one of the steps of evaporating the solvent, thermal curing and cooling, wherein these steps are carried out only to the extent that a plastically deformable state is maintained, wherein a force is directly or indirectly exerted on the impregnate during or after the solidification of the coating, in particular by means of a pressing apparatus,
e) rolling the impregnate onto a winding core to form a roll while maintaining a winding tension of the filaments in the impregnate,
f) optionally securing the roll to the winding core using at least one sleeve and/or by means of at least one adhesive tape,
g) solidifying the impregnate by means of at least one of the steps of evaporating the solvent, thermal curing and cooling, and
h) dividing the solidified impregnate, in particular in parallel with and perpendicularly to the filament direction, in order to form solidified fibre bundles,
wherein, while carrying out step g), a pressure is applied to the roll, which pressure results from the winding tension of the filaments in the impregnate.

2. Method according to claim 1, **characterised in that** the viscous melt is a melt of a thermoplastic plastics material, of a thermosetting synthetic resin, of a pitch and/or of a sugar.

3. Method according to claim 1, **characterised in that** the solvent is a solvent of a thermoplastic plastics material, of a thermosetting synthetic resin, in particular of a phenolic resin, of a pitch and/or of a sugar.

4. Method according to any of the preceding claims, **characterised in that** the impregnate is divided, prior to step e), into strips in parallel with the filament direction by cutting using a cutting device.

5. Method according to any of the preceding claims, **characterised in that** the solidified impregnate is divided, prior to step h), into partial rolls in parallel with the filament direction by cutting using a cutting device.

6. Method according to any of the preceding claims, **characterised in that** immediately after step d) the impregnate is covered with a covering web.

7. Method according to any of the preceding claims, **characterised in that** the filaments include carbon filaments.

8. Method according to any of the preceding claims, **characterised in that**, in step a), a solvent or a melt of an organic substance is used, and, following step h), the solidified fibre bundles are treated at a temperature of from 750 °C to 1300 °C in the absence of oxidising agents, at least some of the organic substance being converted to carbon.

9. Solidified fibre bundles, obtainable by a method according to any of claims 1 to 8.

10. Solidified fibre bundles according to claim 9, **characterised in that** the width of the fibre bundles, measured as the average of the larger spatial extension in each case of the fibre bundles perpendicular to the mean vector in the direction of the longitudinal course of the filaments in the fibre bundle in question is between 0.1 mm and 20 mm, preferably between 0.5 mm and 3 mm, and the length of the fibre bundles, measured as the average of the spatial extension of the fibre bundles parallel to the mean vector in the direction of the longitudinal course of the filaments in the fibre bundle in question is between 2 mm and 50 mm, preferably between 3 mm and 20 mm.

11. Solidified fibre bundles according to either claim 9 or claim 10, **characterised in that** the thickness of the fibre bundles, measured as the average of the smaller spatial extension in each case of the fibre bundles perpendicular to the mean vector in the direction of the longitudinal course of the filaments in the fibre bundle in question is between 0.05 mm and 2 mm, preferably between 0.1 mm and 0.5 mm.

12. Use of the solidified fibre bundles produced according to a method according to any of the preceding claims 1 to 8 as a means for reinforcing thermoplastic plastics material and/or thermosetting synthetic resin.

13. Use according to claim 12, **characterised in that** the thermoplastic plastics material or thermosetting synthetic resin reinforced by the solidified fibre bundles are treated at a temperature of from 750 °C to 1300 °C in the absence of oxidising agents, at least some of the thermoplastic plastics material or thermosetting synthetic resin being converted to carbon by carbonisation.

14. Moulded body which can be obtained by reinforced thermoplastic plastics material shaped into a moulded body and/or thermosetting synthetic resin shaped into a moulded body solidified fibre bundles produced by the methods according to claims 1 to 8 being treated at a temperature of from 750 °C to 1300 °C in the absence of oxidising agents, wherein at least some of the thermoplastic plastics materials and/or thermosetting synthetic resin are converted to carbon by carbonisation, and the carbonised moulded bodies are treated by infiltration with liquid or gaseous carbide-forming elements, in particular above the melting or evaporation temperature thereof, thereby forming carbides of these elements.

15. Use of the solidified fibre bundles produced according to the methods of claims 1 to 8 as a reinforcement means, wherein the solidified fibre bundles are produced from carbon filaments, and wherein said bundles are used as reinforcement means in mixtures comprising thermosetting synthetic resins with at least one other component selected from pitches and particulate carbon.

16. Use according to claim 15, **characterised in that** the mixtures provided with the reinforcement means are processed to form moulded bodies which are then treated at a temperature of from 750 °C to 1300 °C in the absence of oxidising agents, at least some of the thermosetting synthetic resin and some of the pitches being converted to carbon by carbonisation.

## Revendications

1. Procédé destiné à la production de faisceaux de fibres solidifiés, comprenant les étapes suivantes :
a) application d'une matière fondue ou d'une solution sur une bande de support plane, un revêtement visqueux étant ainsi formé.
b) application de filaments parallèles sur cette bande de support ainsi revêtue, lesdits filaments étant soumis à une contrainte de traction
c) enfoncement des filaments dans le revêtement visqueux, un imprégné étant alors obtenu,
d) facultativement, solidification partielle du revêtement jusqu'à obtenir un état de l'imprégné déformable de manière plastique au moyen d'au moins une étape parmi la vaporisation du solvant, le durcissement thermique et le refroidissement, dans lequel ces étapes ne sont exécutées que dans la mesure où un état déformable de manière plastique est conservé, dans lequel une force est exercée directement ou indirectement sur l'imprégné, en particulier par l'intermédiaire d'un dispositif d'impression, pendant ou après la solidification du revêtement,
e) enroulement de l'imprégné sur un mandrin pour obtenir un rouleau, une tension d'enroulement des filaments dans l'imprégné étant maintenue,
f) facultativement, fixation du rouleau externe sur le mandrin à l'aide d'au moins un manchon et/ou d'au moins une bande adhésive,
g) solidification de l'imprégné au moyen d'au moins une étape parmi la vaporisation du solvant, le durcissement thermique et le refroidissement, et
h) découpage de l'imprégné solidifié, en particulier parallèlement et perpendiculairement à la direction des filaments, en vue de former des faisceaux de fibres solidifiés,
dans lequel une pression est exercée sur le rouleau pendant la réalisation de l'étape g), laquelle pression résulte de la tension d'enroulement des filaments dans l'imprégné.

2. Procédé selon la revendication 1, **caractérisé en ce que** la matière fondue visqueuse est une matière fondue d'une matière synthétique en thermoplastique, d'une résine synthétique en duroplastique, d'une poix et/ou d'un sucre.

3. Procédé selon la revendication 1, **caractérisé en ce que** la solution est une solution d'une matière synthétique en thermoplastique, d'une résine synthétique en duroplastique, en particulier d'une résine phénolique, d'une poix et/ou d'un sucre.

4. Procédé selon l'une des revendications précédentes, **caractérisé en ce que** l'imprégné est divisé en lamelles avant l'étape e), parallèlement à la direction des filaments, par une découpe réalisée à l'aide d'un moyen de découpe.

5. Procédé selon l'une des revendications précédentes, **caractérisé en ce que** l'imprégné solidifié est divisé en enroulements partiels avant l'étape h), parallèlement à la dilection des filaments, par une découpe réalisée à l'aide d'un moyen de découpe.

6. Procédé selon l'une des revendications précédentes, **caractérisé en ce que** l'imprégné est recouvert d'une bande de recouvrement juste après l'étape d).

7. Procédé selon l'une des revendications précédentes, **caractérisé en ce que** les filaments comprennent des filaments en carbone.

8. Procédé selon l'une des revendications précédentes, **caractérisé en ce qu'**une solution ou une matière fondue d'une substance organique est utilisée dans l'étape a), et **en ce que**, après l'étape h), les faisceaux de fibres solidifiés sont traités à une température comprise entre 750 °C et 1300 °C en l'absence de tout agent oxydant, dans lequel au moins une partie de la substance organique est convertie en carbone.

9. Faisceaux de fibres solidifiés, obtenus par un procédé selon l'une des revendications 1 à 8.

10. Faisceaux de fibres solidifiés selon la revendication 9, **caractérisés en ce que** la largeur des faisceaux de fibres, mesurée comme étant la moyenne de l'extension dans l'espace des faisceaux de fibres respectivement la plus importante, perpendiculairement au vecteur moyen dans la direction du prolongement longitudinal des filaments dans le faisceau de fibres en question, se situe entre 0,1 mm et 20 mm, de préférence entre 0,5 mm et 3 mm, et la longueur des faisceaux de fibres, mesurée comme étant la moyenne de l'extension dans l'espace des faisceaux de fibres parallèlement au vecteur moyen dans la direction du prolongement longitudinal des filaments dans le faisceau de fibres en question, se situe entre 2 mm et 50 mm, de préférence entre 3 mm et 20 mm.

11. Faisceaux de fibres solidifiés selon l'une des revendications 9 ou 10, **caractérisés en ce que** l'épaisseur des faisceaux de fibres, mesurée comme étant la moyenne de l'extension dans l'espace des faisceaux de fibres respectivement la plus faible, perpendiculairement au vecteur moyen dans la direction du prolongement longitudinal des filaments dans le faisceau de fibres en question, se situe entre 0,05 mm et 2 mm, de préférence entre 0,1 mm et 0,5 mm.

12. Utilisation des faisceaux de fibres solidifiés, fabriqués conformément à un procédé selon l'une des revendications précédentes 1 à 8, comme un moyen de renforcement pour des matières synthétiques en thermoplastique et/ou pour des résines synthétiques en duroplastique.

13. Utilisation selon la revendication 12, **caractérisé en ce que** les matières synthétiques en thermoplastique ou les résines synthétiques en duroplastique renforcées par les faisceaux de fibres solidifiés sont traitées à une température comprise entre 750 °C et 1300 °C en l'absence de tout agent oxydant, dans laquelle au moins une partie des matières synthétiques en thermoplastique ou des résines synthétiques en duroplastique est convertie en carbone par carbonisation.

14. Corps moulé, lequel peut être obtenu en ce que des matières synthétiques en thermoplastique renforcées, formées en un corps moulé, et/ou des résines synthétiques en duroplastique, formées en un corps moulé des faisceaux de fibres solidifiés, fabriqués conformément aux procédés selon les revendications 1 à 8, sont traitées à une température comprise entre 750 °C et 1300 °C en l'absence de tout agent oxydant, dans lequel au moins une partie des matières synthétiques en thermoplastique et/ou des résines synthétiques en duroplastique est convertie en carbone par carbonisation, et les corps moulés carbonisés sont traités par infiltration par d'éléments liquides ou gazeux formant des carbures, en particulier à une température supérieure à leur température de fusion ou d'évaporation, en formant des carbures de ces éléments.

15. Utilisation des faisceaux de fibres solidifiés, fabriqués selon les procédés issus des revendications 1 à 8, comme un moyen de renforcement, dans laquelle les faisceaux de fibres solidifiés sont fabriqués à partir de filaments en carbone, et dans laquelle ils sont utilisés comme un moyen de renforcement dans des mélanges avec des résines synthétiques en duroplastique avec au moins un autre composant, sélectionné à partir de poix et de carbone en particules,

16. Utilisation selon la revendication 15, **caractérisée en ce que** les mélanges pourvus du moyen de renforcement sont convertis en corps moulés, qui sont ensuite traités à une température comprise entre 750 °C et 1300 °C en l'absence de tout agent oxydant, dans laquelle au moins une partie des résines synthétiques en duroplastique et des poix est convertie en carbone par carbonisation.
